# EUROPEAN PATENT SPECIFICATION

(11) **EP 2 161 844 B1**
(45) Date of publication and mention of the grant of the patent: **28.03.2012**
(21) Application number: 09164522.6
(22) Date of filing: 03.07.2009
(51) Int. Cl.: H04B 1/40

(54) **Frequency conversion device, method and system**
Frequenzumsetzungsvorrichtung, -verfahren und -system
Dispositif de conversion de fréquence, procédé et système

(30) Priority: 05.09.2008 CN 200810212223
(43) Date of publication of application: 10.03.2010
(73) Proprietor: Huawei Technologies Co., Ltd., Longgang District, Shenzhen Guangdong 518129 (CN)
(72) Inventor: Gou, Haiou, 518129, Shenzhen Guangdong (CN); Lv, Tinghai, 518129, Shenzhen Guandgdong (CN); Yang, Jianjun, 518129, Shenzhen Guangdong (CN); Li, Dejun, 518129, Shenzhen Guangdong (CN)
(74) Representative: Thun, Clemens

(56) References cited:
- WO-A-81/02081
- US-A1- 2003 085 836
- US-B1- 6 324 379
- US-B1- 6 484 013
- US-B1- 7 013 121
- US-B2- 6 937 456

## Description

### FIELD OF THE INVENTION

The present invention relates to a digital microwave communication technology field, and more particularly to an outdoor unit, method and system.

### BACKGROUND

In a digital microwave system, plesiochronous digital hierarchy (PDH) and synchronous digital hierarchy (SDH) signals are transmitted in a wireless manner. The digital microwave system is composed of an indoor unit (IDU) and an outdoor unit (ODU).

The ODU is installed and maintained outdoors, so the ODU having a small volume and weight is conveniently installed and maintained. Meanwhile, in a digital microwave system, because of the technical difficulty and the price of device, the cost of the ODU accounts for nearly a half of the cost of the whole digital microwave system. It is recently a hot spot attracting much attention how to lower the volume, weight, power consumption, and cost of the ODU.

When the digital microwave system is working, the IDU sends an intermediate frequency (IF) signal to the ODU, the ODU performs an up frequency conversion on the IF signal and amplifies the IF signal to achieve an appropriate frequency and power, and transmits the IF signal to a next ODU via an antenna. The next ODU receives the signal, performs a down frequency conversion on the signal, amplifies the signal, and sends the signal to the IDU. The IDU demodulates the signal transmitted by the previous ODU. Therefore, the signal transmission is realized.

A feature of the ODU is that the transmitting and receiving frequencies are both quite high, being up to 6-38 GHz, but the frequencies of the IDU are quite low, being usually hundreds of MHz. Therefore, when the signal is transmitted, the signal having the low frequency of the IDU has to be converted to the signal having the transmitting frequency of the ODU; and when the signal is received, a microwave signal having a quite high frequency of ODU has to be converted to the signal having the frequency band capable of being processed by the IDU. In the prior art, the frequency change is realized through performing frequency conversion twice.

During the process of realizing the present invention, the inventor find that the prior art at least has the problems as follows.

Additionally, US-B1-6 324 379 disclosed transceiver systems and methods that preserve frequency order when downconverting communication signals and upconverting data signals. A full-duplex, coherent transceiver that provides a direct interface for a communication signal band and a data signal band in wireless cable systems, includes a frequency downconverter, a frequency upconverter, a mixer signal source, and a frequency divider. US 2003/054789 A1 disclosed direct digitally tunable microwave oscillators and filters. A direct digitally controlled microwave tuning element includes a microwave circuit, and an electrically tunable element. US-B1-7 013 121 disclosed a frequency conversion circuit using common local synthesizer. An apparatus for microwave radio frequency communication wherein an upstream radio frequency (RF) band is used for transmitting signals in an upstream direction, and a downstream radio frequency band is used for receiving signals in a downstream direction, includes an up-converter, a down-converter, and a first frequency multiplier circuit.
Finally US 2003/0085836 A1 discloses a RF module including a multi-chip substrate. An antenna block, a duplexer block, a transmitter block, a receiver block, and an oscillator block are formed on separate substrates. An incoming IF signal is upconverted and forwarded to the antenna block for transmission.

In the prior art, excessive devices are used when performing frequency conversion twice, so that the cost is relatively high, transmit link and receive link are long, and the volume and the weight of the ODU are thus increased. Meanwhile, the excessive active devices result in that the power consumption of the whole system is quite high.

### SUMMARY

The present invention provides an outdoor unit, ODU, method and system, capable of realizing frequency conversion of a digital microwave once, thus reducing the amount of components, and lowering the weight, volume, cost, and power consumption of the ODU.

The present invention provides an outdoor unit, ODU, comprising a frequency conversion sending device, which includes a first IF filter, a first local oscillator, an up frequency converter, and a first duplexer.

The first IF filter is adapted to receive an IF signal from an indoor unit, IDU, of said microwave system, and send the IF signal after performing an IF filtering on the IF signal.

The first local oscillator is adapted to generate and send a local oscillator signal.

The up frequency converter is adapted to receive the IF signal after the IF filtering and the local oscillator signal, perform an up frequency conversion on the IF signal to obtain a microwave signal according to the local oscillator signal, and send the microwave signal.

The first duplexer is adapted to receive the microwave signal, and send the microwave signal to a next ODU via an antenna after performing a band pass filtering on the microwave signal.

The device further includes a first band pass filter between the up frequency converter and the first duplexer.

The first band pass filter is adapted to receive the microwave signal from the up frequency converter, and send the microwave signal to the first duplexer after performing the band pass filtering on the microwave signal.

The present invention provides a frequency conversion sending method, which includes steps as follows, wherein the steps are performed in an outdoor unit, ODU.

A first IF filter receives an IF signal from an indoor unit, IDU, of said microwave system, and sends the IF signal after performing an IF filtering on the IF signal.

A first local oscillator generates and sends a local oscillator signal.

An up frequency converter receives the IF signal after the IF filtering and the local oscillator signal, performs an up frequency conversion on the IF signal to obtain a microwave signal according to the local oscillator signal, and sends the microwave signal.

A first duplexer receives the microwave signal, and sends the microwave signal after performing a band pass filtering on the microwave signal.

A first band pass filter receives the microwave signal from the up frequency converter, and sending the microwave signal to the first duplexer after performing the band pass filtering on the microwave signal.

The present invention further provides a frequency conversion system, which includes the ODU and a frequency conversion receiving device.

The frequency conversion receiving device is adapted to receive the microwave signal from the frequency conversion sending device, perform the band pass filtering again on the microwave signal, perform the high pass filtering and the low pass filtering on the microwave signal, generate a local oscillator signal, perform a down frequency conversion on the microwave signal after performing the high pass filtering and the low pass filtering again to obtain an IF signal according to the local oscillator signal, and perform the IF filtering on the IF signal to obtain a filtered signal.

As compared with the prior art, the embodiments of the present invention have advantages as follows.

By the use of the ODU according to the embodiments of the present invention, frequency conversion of the digital microwave once is realized, and the frequency conversion is easily realized. Further, the amount of components is reduced, thereby lowering the weight, volume, cost, and power consumption of the device.

### BRIEF DESCRIPTION OF THE DRAWINGS

FIG. 1 is a structural view of a frequency conversion sending device according to an embodiment of the present invention;

FIG 2 is a structural view of a frequency conversion receiving device according to an embodiment of the present invention;

FIG. 3 is a structural view of a frequency conversion sending device according to a first embodiment of the present invention;

FIG. 4 is a structural view of a frequency conversion receiving device according to a second embodiment of the present invention;

FIG 5 is a flow chart of a frequency conversion sending method according to an embodiment of the present invention;

FIG. 6 is a flow chart of a frequency conversion receiving method according to an embodiment of the present invention; and

FIG. 7 is a structural view of a frequency conversion system according to an embodiment of the present invention.

### DETAILED DESCRIPTION

The present invention provides a frequency conversion device, method and system, so as to eliminate effects in the prior art such as excessive devices, high cost, long transmit link and receive link, and high power consumption of the system.

The implementation manner of the present invention is further described with accompanying drawings and embodiments below.

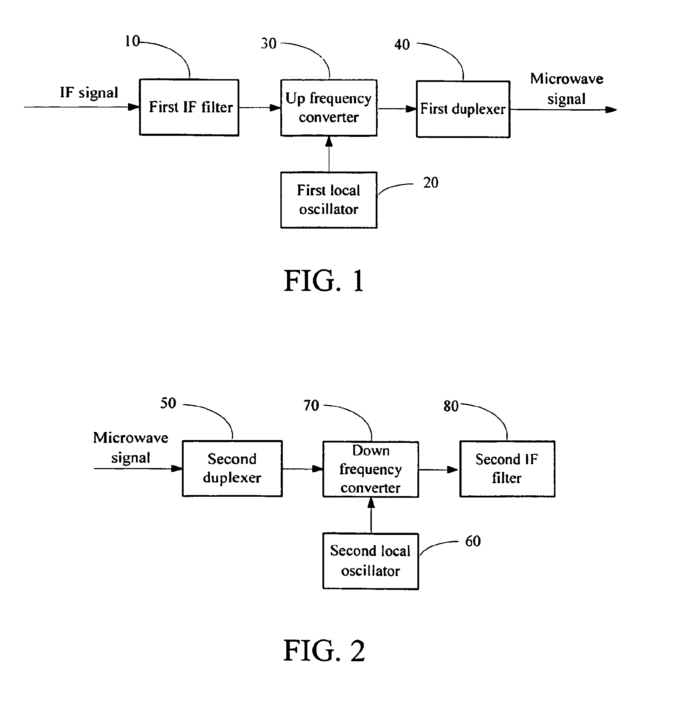

. Referring to FIG. 1, a frequency conversion sending device according to an embodiment of the present invention is shown, which includes a first IF filter 10, a first local oscillator 20, an up frequency converter 30, and a first duplexer 40.

The first IF filter 10 is adapted to receive an IF signal, and send the IF signal after performing an IF filtering on the IF signal.

The first local oscillator 20 is adapted to generate and send a local oscillator signal.

The up frequency converter 30 is adapted to receive the IF signal after the IF filtering and the local oscillator signal, perform an up frequency conversion on the IF signal to obtain a microwave signal according to the local oscillator signal, and send the microwave signal.

The first duplexer 40 is adapted to receive the microwave signal, and send the microwave signal after performing a band pass filtering on the microwave signal.

Referring to FIG. 2, a frequency conversion receiving device according to an embodiment of the present invention is shown, which includes a second duplexer 50, a second local oscillator 60, a down frequency converter 70, and a second IF filter 80.

The second duplexer 50 is adapted to receive a microwave signal, and send the microwave signal after performing a band pass filtering on the microwave signal.

The second local oscillator 60 is adapted to generate and send a local oscillator signal.

The down frequency converter 70 is adapted to receive the microwave signal after the band pass filtering and the local oscillator signal, perform a down frequency conversion on the microwave signal to obtain an IF signal according to the local oscillator signal, and send the IF signal.

The second IF filter 80 is adapted to receive the IF signal, perform an IF filtering on the IF signal to obtain the filtered signal.

By the use of the frequency conversion device according to the embodiments of present invention, frequency conversion of a digital microwave ODU once is realized, the frequency conversion is easily realized. Further, the amount of components is reduced, thereby lowering the weight, volume, cost, and power consumption of the device.

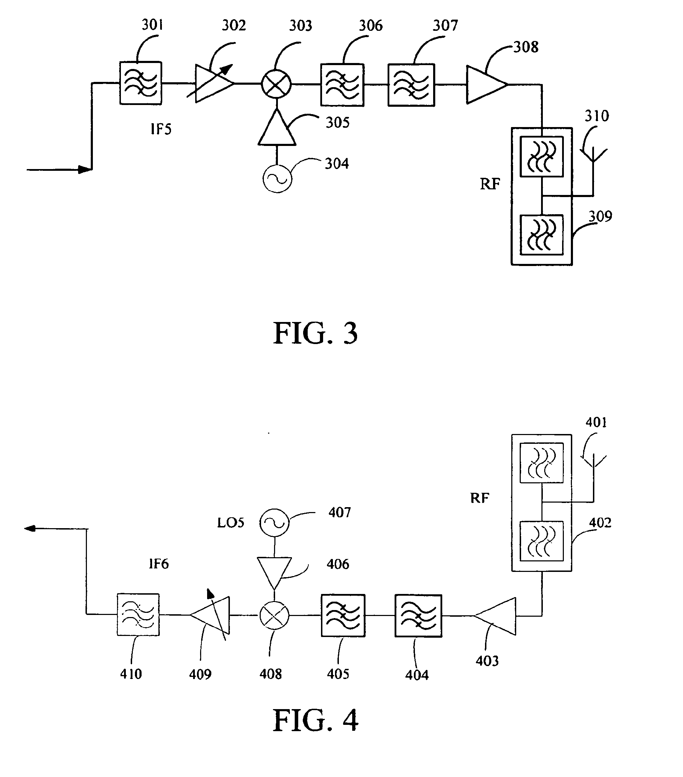

In a first embodiment of the present invention, the structure of the frequency conversion sending device is described by setting a transmit link of an ODU as an example. Referring to FIG. 3, the frequency conversion device includes an IF filter 301, an IF amplifier 302, an up frequency converter 303, a local oscillator 304, an amplifier 305, a low pass filter 306, a high pass filter 307, a power amplifier 308, a duplexer 309, and an antenna 310. Particularly, detailed principles and functions of each part in the frequency conversion sending device are realized as follows.

The IF filter 301 is adapted to perform an IF filtering on an IF signal IF5 received, and send a filtered signal to the IF amplifier 302.

The IF amplifier 302 is adapted to amplify the filtered signal received, and send an amplified signal to the up frequency converter 303.

The up frequency converter 303 is adapted to perform a frequency conversion on the amplified signal received to obtain a microwave signal, and send the microwave signal to the low pass filter 306. Particularly, the local oscillator 304 provides a radio frequency signal serving as a local oscillator signal, the amplifier 305 amplifies the local oscillator signal and sends the local oscillator signal to the up frequency converter 303, and the up frequency converter 303 performs the frequency conversion.

The low pass filter 306 is adapted to perform a low pass filtering on the microwave signal received, and send a filtered signal to the high pass filter 307.

The high pass filter 307 is adapted to perform a high pass filtering on the filtered signal received, and send the filtered signal to the power amplifier 308.

The power amplifier 308 is adapted to perform power amplification on the filtered signal received, and send an amplified signal to the duplexer 309.

The duplexer 309 is adapted to perform a filtering again on the amplified signal received, and send the signal to a next ODU via the antenna 310.

During the process of realizing the functions, the up frequency conversion is performed once on the IF signal IF5 sent from the IDU to the ODU, and then the frequency of the microwave signal is directly output.

It should be noted that during the above-mentioned process, the up frequency converter 303 receives the local oscillator signal sent by the local oscillator 304, and performs the up frequency conversion on the IF signal sent by the IF amplifier to obtain the microwave signal. The frequency of the local oscillator signal is quite close to that of the microwave signal, so that the interference of the image frequency of the signal received on the microwave signal is relatively high. The local oscillator signal and the image frequency may be noise signals of the microwave signal after the frequency conversion. In order to filter the noise signals, in the embodiments of the present invention, the duplexer and the band pass filter composed of the low pass filter 306 and the high pass filter 307 are adapted to filter the noise signals. A frequency selection scope of the IF frequency IF5 restrains the local oscillator signal and the image frequency in a certain degree, so that in the embodiments of the present invention, the frequency selection scope of the IF frequency IF5 is usually between 300 MHz and 1000 MHz.

By the use of the frequency conversion sending device according to the embodiment of the present invention, frequency conversion of the digital microwave ODU once is realized, and the frequency conversion is easily realized. Further, the amount of components is reduced, thereby lowering the weight, volume, cost, and power consumption of the device. In the embodiment of the present invention, only two local oscillators are used, and thus the frequency configuration is more easily realized.

In a second embodiment of the present invention, the structure of the frequency conversion receiving device is further described by setting a receive link of an ODU as an example. Referring to FIG. 4, the frequency conversion receiving device includes an IF filter 410, an IF amplifier 409, a down frequency converter 408, a local oscillator 407, an amplifier 406, a low pass filter 405, a high pass filter 404, a low noise amplifier 403, a duplexer 402, and an antenna 401. Particularly, detailed principles and functions of each part in the frequency conversion receiving device are realized as follows.

The antenna 401 is adapted to receive the microwave signal sent by the previous ODU, and send the microwave signal to the duplexer 402.

The duplexer 402 is adapted to filter the microwave signal to extract useful signal, and send the useful signal to the low noise amplifier 403.

The low noise amplifier 403 is adapted to amplify the useful signal and send an amplified signal to the high pass filter 404.

The high pass filtering 404 is adapted to perform the high pass filtering on the amplified signal, and send a filtered signal to the low pass filter 405.

The low pass filter 405 is adapted to perform the low pass filtering on the signal received, and send the filtered signal to the down frequency converter 408.

The down frequency converter 408 is adapted to perform the frequency conversion on the filtered signal received to obtain an IF signal IF6, and send the signal to the IF amplifier 409. Particularly, the local oscillator 407 provides a radio frequency signal serving as a local oscillator signal, the amplifier 406 amplifies the local oscillator signal and sends the local oscillator signal to the down frequency converter 408, and the down frequency converter 408 performs the frequency conversion.

The IF amplifier 409 is adapted to amplify the IF signal IF6 received, and send the IF signal IF6 to the IF filter 410.

The IF filter 410 is adapted to filter the signal received, and send a filtered signal to the IDU for being processed.

Through the description of the functions, the down frequency conversion is performed once on the microwave signal received by the antenna to obtain an IF signal, and the IF signal is transmitted to the IDU for being processed via the IF cable.

It should be noted that in the receive link, the frequency of the microwave signal received by the antenna 401 is relatively high, and the frequency of the local oscillator signal provided by the local oscillator 407 is quite close to the frequency of the microwave signal, so the interference of the image frequency of the signal received on the microwave signal is relatively high. In order to sufficiently restrain the local oscillator signal and the image frequency, a frequency selection scope of the IF signal IF6 after the frequency conversion is usually between 140 MHz and 600 MHz. Further, in order to better filter the local oscillator signal and the image frequency, in the embodiment of the present invention, the duplexer 402 and the band pass filter composed of the high pass filter 404 and the low pass filter 405 are adapted to filter noise signals.

The IF frequency of the ODU is changed, so that the IF frequency of the IDU is correspondingly changed from the lower frequency to the same frequency as the IF transmitting and receiving frequencies of the ODU.

By the use of the frequency conversion receiving device according to the embodiment of the present invention, frequency conversion of the digital microwave ODU once is realized, and the frequency conversion is easily realized. Further, the amount of components is reduced, thereby lowering the weight, volume, cost, and power consumption of the device. In the embodiment of the present invention, only two local oscillators are used, so the frequency configuration is more easily realized.

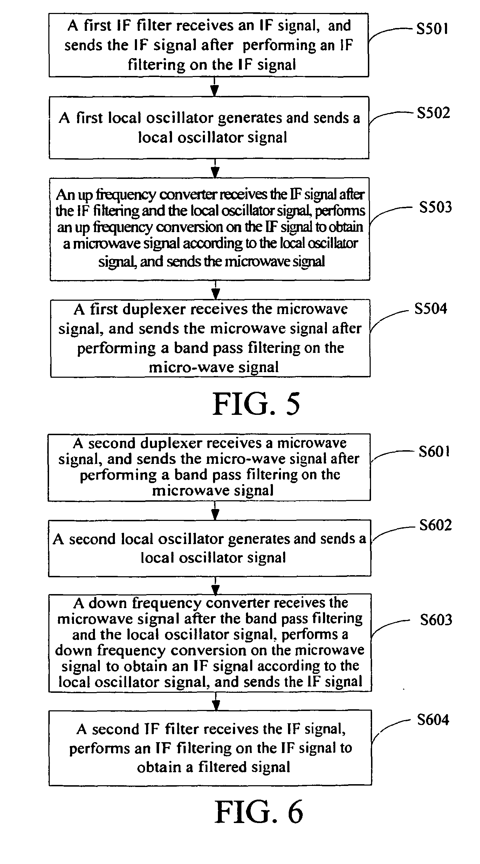

The present invention further provides a frequency conversion sending method. Referring to FIG. 5, the method includes the steps as follows.

In step S501, a first IF filter receives an IF signal, and sends the IF signal after performing an IF filtering on the IF signal.

In this step, the purpose of performing the IF filtering is filtering other noise signals except for the IF signal.

In step S502, a first local oscillator generates and sends a local oscillator signal.

Before the local oscillator signal is sent, the local oscillator signal may be amplified by an amplifier.

In step S503, an up frequency converter receives the IF signal after the IF filtering and the local oscillator signal, performs an up frequency conversion on the IF signal to obtain a microwave signal according to the local oscillator signal, and sends the microwave signal.

In step S504, a first duplexer receives the microwave signal, and sends the microwave signal after performing a band pass filtering on the microwave signal.

Before the first duplexer receives the microwave signal, the microwave signal may be amplified.

Preferably, a first band pass filter receives the microwave signal sent by the up frequency converter, and sends the filtered microwave signal to the first duplexer after performing the band pass filtering on the microwave signal. When the band pass filtering is performed on the microwave signal, a low pass filtering is performed on the microwave signal to remove the local oscillator signal, and a high pass filtering is performed on the microwave signal after performing the low pass filtering to remove an image frequency

An embodiment of the present invention further provides a frequency conversion receiving method. Referring to FIG. 6, the method includes the steps as follows.

In step S601, a second duplexer receives a microwave signal, and sends the microwave signal after performing a band pass filtering on the microwave signal.

Before the band pass filtering is performed on the microwave signal and the microwave signal is sent, the microwave signal may be amplified.

In step S602, a second local oscillator generates and sends a local oscillator signal.

Before the local oscillator signal is sent, the local oscillator signal may be amplified by an amplifier.

In step S603, a down frequency converter receives the microwave signal after the band pass filtering and the local oscillator signal, performs a down frequency conversion on the microwave signal to obtain an IF signal according to the local oscillator signal, and sends the IF signal.

In step S604, a second IF filter receives the IF signal, performs an IF filtering on the IF signal to obtain a filtered signal.

In this step, the purpose of performing the IF filtering on the microwave signal is filtering other noise signals except for the IF signal.

Preferably, a second band pass filter receives the microwave signal sent by the second duplexer, and sends the microwave signal to the down frequency converter after performing the band pass filtering on the microwave signal.

When the second band pass filter performs the band pass filtering on the microwave signal received from the second duplexer, a high pass filtering is performed on the microwave signal to remove an image frequency, and a low pass filtering is performed on the microwave signal after performing the high pass filtering to remove the local oscillator signal.

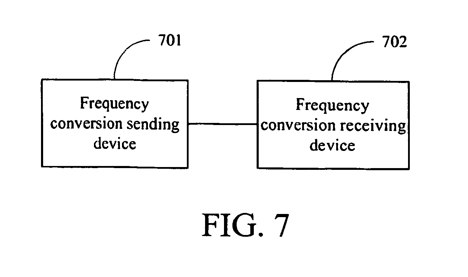

An embodiment of the present invention further provides a frequency conversion system. Referring to FIG. 7, the system includes a frequency conversion sending device 701 and a frequency conversion receiving device 702.

The frequency conversion sending device 701 is adapted to receive an IF signal, perform an IF filtering on the IF signal, generate a local oscillator signal, perform an up frequency conversion on the IF signal after the IF filtering to obtain a microwave signal according to the local oscillator signal, and send the microwave signal after performing a band pass filtering on the microwave signal.

The frequency conversion receiving device 702 is adapted to receive the microwave signal from the frequency conversion sending device 701, perform the band pass filtering again on the microwave signal, generate a local oscillator signal, perform a down frequency conversion on the microwave signal after performing the band pass filtering again to obtain an IF signal according to the local oscillator signal, and perform the IF filtering on the IF signal to obtain a filtered signal.

By the use of the frequency conversion method and the system thereof according to the embodiments of the present invention, frequency conversion of the digital microwave ODU once is realized, and the frequency conversion is easily realized. Further, the amount of components is reduced, thereby lowering the weight, volume, cost, and power consumption of the device.

Through the description of the implementation manner, those skilled in the art may clearly know that the present invention may be realized by using the hardware, and may also be realized by using the software and the necessary hardware platform. Based on this understanding, the technical solution of the present invention may be realized in the software product form. The computer software product is stored in a non-volatile memory medium, such as a compact disc read only memory (CD-ROM), a universal serial bus (USB) disc, or a mobile hard disk, and includes several instructions adapted to enable a computer device (such as a personal computer, a server, or a network device) to execute the method according to each embodiment of the present invention.

It will be apparent to those skilled in the art that various modifications and variations can be made to the present invention without departing from the scope of the invention. In view of the foregoing, it is intended that the present invention cover modifications and variations of this invention provided that they fall within the scope of the following claims.

## Claims

1. An outdoor unit, ODU, of a digital microwave system, comprising a frequency conversion sending device, wherein the frequency conversion sending device comprises:
a first intermediate frequency (IF) filter (10, 301), adapted to receive an IF signal from an indoor unit, IDU, of said microwave system, and send the IF signal after performing an IF filtering on the IF signal;
a first local oscillator (20, 304), adapted to generate and send a local oscillator signal;
only one up frequency converter (30, 303), adapted to receive the IF signal after the IF filtering and the local oscillator signal, perform an up frequency conversion on the IF signal to obtain a microwave signal according to the local oscillator signal, and send the microwave signal; and
a first duplexer (40, 309), adapted to receive the microwave signal, and send the microwave signal to a next ODU via an antenna (310) after performing a band pass filtering on the microwave signal;
wherein between the up frequency converter (30, 303) and the first duplexer (40, 309), the device further comprises:
a first band pass filter, adapted to receive the microwave signal from the up frequency converter (30, 303), and send the microwave signal to the first duplexer (40, 309) after performing the band pass filtering on the microwave signal.

2. The ODU according to claim 1, wherein the first band pass filter comprises a low pass filter (306) and a high pass filter (307),
the low pass filter (306) is adapted to receive the microwave signal from the up frequency converter (30, 303), and send the microwave signal to the high pass filter (307) after performing a low pass filtering on the microwave signal to remove the local oscillator signal; and
the high pass filter (307) is adapted to send the microwave signal to the first duplexer (40, 309) after performing a high pass filtering on the microwave signal received to removed an image frequency.

3. A frequency conversion sending method, wherein the following steps are performed in an outdoor unit, ODU, of a digital microwave system, comprising:
receiving, by a first intermediate frequency (IF) filter (10, 301), an IF signal from an indoor unit, IDU, of said microwave system, and sending the IF signal after performing an IF filtering on the IF signal;
generating and sending, by a first local oscillator (20, 304), a local oscillator signal;
receiving, by an up frequency converter (30, 303), the IF signal after the IF filtering and the local oscillator signal, performing only once an up frequency conversion on the IF signal to obtain a microwave signal according to the local oscillator signal, and sending the microwave signal;
receiving, by a first duplexer (40, 309), the microwave signal, and sending the microwave signal after performing a band pass filtering on the microwave signal; and
receiving, by a first band pass filter, the microwave signal from the up frequency converter (30, 303), and sending the microwave signal to the first duplexer (40, 309) after performing the band pass filtering on the microwave signal.

4. The method according to claim 3, wherein the performing the band pass filtering on the microwave signal comprises:
performing a low pass filtering on the microwave signal to remove the local oscillator signal, and performing a high pass filtering on the microwave signal after performing the low pass filtering to remove an image frequency.

5. A frequency conversion system, comprising:
an ODU (701) according to claim 1 or 2; and
a frequency conversion receiving device (702), adapted to receive the microwave signal from the frequency conversion sending device, perform the band pass filtering again on the microwave signal, perform the high pass filtering and the low pass filtering on the microwave signal, generate a local oscillator signal, perform a down frequency conversion on the microwave signal after performing the high pass filtering and the low pass filtering to obtain an IF signal according to the local oscillator signal, and perform the IF filtering on the IF signal to obtain a filtered signal.

## Patentansprüche

1. Außeneinheit ODU eines digitalen Mikrowellensystems, umfassend eine Frequenzumwandlungs-Sendeeinrichtung, wobei die Frequenzumsetzungs-Sendeeinrichtung Folgendes umfasst:
ein erstes Zwischenfrequenz- bzw. ZF-Filter (10, 301), das dafür ausgelegt ist, ein ZF-Signal von einer Inneneinheit IDU des Mikrowellensystems zu empfangen und das ZF-Signal nach Ausführung einer ZF-Filterung an dem ZF-Signal zu senden;
einen ersten Lokaloszillator (20, 304), der dafür ausgelegt ist, ein Lokaloszillatorsignal zu erzeugen und zu senden;
nur einen Aufwärtsfrequenzumsetzer (30, 303), der dafür ausgelegt ist, das ZF-Signal nach der ZF-Filterung und das Lokaloszillatorsignal zu empfangen, gemäß dem Lokaloszillatorsignal eine Aufwärtsfrequenzumsetzung an dem ZF-Signal auszuführen, um ein Mikrowellensignal zu erhalten, und das Mikrowellensignal zu senden; und
einen ersten Duplexer (40, 309), der dafür ausgelegt ist, das Mikrowellensignal zu empfangen und das Mikrowellensignal nach Ausführen einer Bandpassfilterung an dem Mikrowellensignal über eine Antenne (310) zu einer nächsten ODU zu senden;
wobei zwischen dem Aufwärtsfrequenzumsetzer (30, 303) und dem ersten Duplexer (40, 309) die Einrichtung ferner Folgendes umfasst:
ein erstes Bandpassfilter, das dafür ausgelegt ist, das Mikrowellensignal von dem Aufwärtsfrequenzumsetzer (30, 303) zu empfangen und das Mikrowellensignal nach Ausführen der Bandpassfilterung an dem Mikrowellensignal zu dem ersten Duplexer (40, 309) zu senden.

2. ODU nach Anspruch 1, wobei das erste Bandpassfilter ein Tiefpassfilter (306) und ein Hochpassfilter (307) umfasst,
das Tiefpassfilter (306) dafür ausgelegt ist, das Mikrowellensignal von dem Aufwärtsfrequenzumsetzer (30, 303) zu empfangen und das Mikrowellensignal nach Ausführen einer Tiefpassfilterung an dem Mikrowellensignal zur Entfernung des Lokaloszillatorsignals zu dem Hochpassfilter (307) zu senden; und das Hochpassfilter (307) dafür ausgelegt ist, das Mikrowellensignal nach Ausführen einer Hochpassfilterung an dem empfangenen Mikrowellensignal zur Entfernung einer Bildfrequenz zu dem ersten Duplexer (40, 309) zu senden.

3. Frequenzumsetzungs-Sendeverfahren, wobei die folgenden Schritte in einer Außeneinheit ODU eines digitalen Mikrowellensystems ausgeführt werden, umfassend:
Empfangen eines ZF-Signals von einer Inneneinheit IDU des Mikrowellensystems durch ein erstes Zwischenfrequenz- bzw. ZF-Filter (10, 301) und Senden des ZF-Signals nach Ausführen einer ZF-Filterung an dem ZF-Signal;
Erzeugen und Senden eines Lokaloszillatorsignals durch einen ersten Lokaloszillator (20, 304);
Empfangen des ZF-Signals nach der ZF-Filterung und des Lokaloszillatorsignals durch einen Aufwärtsfrequenzumsetzer (30, 303), Ausführen einer Aufwärtsfrequenzumsetzung an dem ZF-Signal nur einmal gemäß dem Lokaloszillatorsignal, um ein Mikrowellensignal zu erhalten, und Senden des Mikrowellensignals;
Empfangen des Mikrowellensignals durch einen ersten Duplexer (40, 309) und Senden des Mikrowellensignals nach Ausführen einer Bandpassfilterung an dem Mikrowellensignal; und
Empfangen des Mikrowellensignals von dem Aufwärtsfrequenzumsetzer (30, 303) durch ein erstes Bandpassfilter und Senden des Mikrowellensignals zu dem ersten Duplexer (40, 309) nach Ausführen der Bandpassfilterung an dem Mikrowellensignal.

4. Verfahren nach Anspruch 3, wobei das Ausführen der Bandpassfilterung an dem Mikrowellensignal Folgendes umfasst:
Ausführen einer Tiefpassfilterung an dem Mikrowellensignal, um das Lokaloszillatorsignal zu entfernen, und Ausführen einer Hochpassfilterung an dem Mikrowellensignal nach dem Ausführen der Tiefpassfilterung, um eine Bildfrequenz zu entfernen.

5. Frequenzumsetzungssystem, umfassend:
eine Außeneinheit ODU (701) nach Anspruch 1 oder 2; und
eine Frequenzumsetzungs-Empfangseinrichtung (702), die dafür ausgelegt ist, das Mikrowellensignal von der Frequenzumsetzungs-Sendeeinrichtung zu empfangen, wieder die Bandpassfilterung an dem Mikrowellensignal auszuführen, die Hochpassfilterung und die Tiefpassfilterung an dem Mikrowellensignal auszuführen, ein Lokaloszillatorsignal zu erzeugen, nach dem Ausführen der Hochpassfilterung und der Tiefpassfilterung gemäß dem Lokaloszillatorsignal eine Abwärtsfrequenzumsetzung an dem Mikrowellensignal auszufahren, um ein ZF-Signal zu erhalten, und die ZF-Filterung an dem ZF-Signal auszuführen, um ein gefiltertes Signal zu erhalten.

## Revendications

1. Unité extérieure, dite ODU, d'un système numérique à hyperfréquences, comprenant un dispositif de transmission à conversion de fréquence, le dispositif de transmission à conversion de fréquence comprenant :
un premier filtre à fréquence intermédiaire (IF) (10, 301), conçu pour recevoir un signal IF d'une unité intérieure, dite IDU, dudit système à hyperfréquences et pour transmettre le signal IF après avoir fait subir au signal IF un filtrage IF ;
un premier oscillateur local (20, 304), conçu pour générer et pour transmettre un signal d'oscillateur local ;
un seul convertisseur-élévateur de fréquence (30, 303), conçu pour recevoir le signal IF ayant subi le filtrage IF et le signal d'oscillateur local, pour faire subir au signal IF une conversion-élévation de fréquence afin d'obtenir un signal hyperfréquence conforme au signal d'oscillateur local, et pour transmettre le signal hyperfréquence ;
et
un premier duplexeur (40, 309), conçu pour recevoir le signal hyperfréquence et pour transmettre le signal hyperfréquence à une ODU suivante par une antenne (310) après avoir fait subir au signal hyperfréquence un filtrage passe-bande ;
le dispositif comprenant en outre, entre le convertisseur-élévateur de fréquence (30, 303) et le premier duplexeur (40, 309) :
un premier filtre passe-bande, conçu pour recevoir le signal hyperfréquence du convertisseur-élévateur de fréquence (30, 303) et pour transmettre le signal hyperfréquence au premier duplexeur (40, 309) après avoir fait subir au signal hyperfréquence un filtrage passe-bande.

2. ODU selon la revendication 1, le premier filtre passe-bande comprenant un filtre passe-bas (306) et un filtre passe-haut (307),
le filtre passe-bas (306) étant conçu pour recevoir le signal hyperfréquence du convertisseur-élévateur de fréquence (30, 303) et pour transmettre le signal hyperfréquence au filtre passe-haut (307) après avoir fait subir au signal hyperfréquence un filtrage passe-bas afin de supprimer le signal d'oscillateur local ; et
le filtre passe-haut (307) étant conçu pour transmettre le signal hyperfréquence au premier duplexeur (40, 309) après avoir fait subir au signal hyperfréquence reçu un filtrage passe-haut afin de supprimer une fréquence-image.

3. Procédé de transmission à conversion de fréquence, le procédé comprenant les étapes, mises en oeuvre dans une unité extérieure, dite ODU, d'un système numérique à hyperfréquences, consistant à :
recevoir, au moyen d'un premier filtre à fréquence intermédiaire (IF) (10, 301), un signal IF d'une unité intérieure, dite IDU, dudit système à hyperfréquences, et transmettre le signal IF après avoir fait subir au signal IF un filtrage IF ;
générer et transmettre, au moyen d'un premier oscillateur local (20, 304), un signal d'oscillateur local ;
recevoir, au moyen d'un convertisseur-élévateur de fréquence (30, 303), le signal IF ayant subi le filtrage IF et le signal d'oscillateur local, faire subir une seule fois au signal IF une conversion-élévation de fréquence afin d'obtenir un signal hyperfréquence conforme au signal d'oscillateur local, et transmettre le signal hyperfréquence ;
recevoir, au moyen d'un premier duplexeur (40, 309), le signal hyperfréquence, et transmettre le signal hyperfréquence après avoir fait subir au signal hyperfréquence un filtrage passe-bande ; et
recevoir, au moyen d'un premier filtre passe-bande, le signal hyperfréquence du convertisseur-élévateur de fréquence (30, 303), et transmettre le signal hyperfréquence au premier duplexeur (40, 309) après avoir fait subir au signal hyperfréquence le filtrage passe-bande.

4. Procédé selon la revendication 3, l'étape consistant à faire subir au signal hyperfréquence le filtrage passe-bande comprenant l'étape consistant à :
faire subir au signal hyperfréquence un filtrage passe-bas afin de supprimer le signal d'oscillateur local, et faire subir au signal hyperfréquence un filtrage passe-haut après lui avoir fait subir le filtrage passe-bas afin de supprimer une fréquence-image.

5. Système de conversion de fréquence, comprenant :
une unité extérieure, dite ODU (701) selon la revendication 1 ou 2 ; et
un dispositif de réception à conversion de fréquence (702), conçu pour recevoir le signal hyperfréquence du dispositif de transmission à conversion de fréquence, pour faire subir une nouvelle fois au signal hyperfréquence le filtrage passe-bande, pour faire subir au signal hyperfréquence le filtrage passe-haut et le filtrage passe-bas, pour générer un signal d'oscillateur local, pour faire subir au signal hyperfréquence une conversion-abaissement de fréquence après lui avoir fait subir le filtrage passe-haut et le filtrage passe-bas afin d'obtenir un signal IF conforme au signal d'oscillateur local, et faire subir au signal IF le filtrage IF afin d'obtenir un signal filtré.
